# EUROPEAN PATENT SPECIFICATION

(11) **EP 2 150 863 B1**
(45) Date of publication and mention of the grant of the patent: **28.12.2011**
(21) Application number: 08749842.4
(22) Date of filing: 29.04.2008
(51) Int. Cl.: G05B 19/401, B23Q 15/12

(54) **MACHINE TOOL FOR PRECISION MICRO-MILLING AND/OR DRILLING**
MASCHINENWERKZEUG FÜR HOCHGENAUES MIKROFRÄSEN UND/ODER BOHREN
MACHINE-OUTIL PERMETTANT UN MICRO-FRAISAGE ET/OU UN MICRO-FORAGE DE PRÉCISION

(30) Priority: 04.05.2007 IT PD20070164
(43) Date of publication of application: 10.02.2010
(73) Proprietor: LG Technologies S.R.L., 32013 Longarone (IT)
(72) Inventor: BUSATTA, Luigi, I-10015 Ivrea (to) (IT); BUSATTA, Gioachino, I-36061 Bassano Del Grappa (vi) (IT)
(74) Representative: Cantaluppi, Stefano
(86) International application number: PCT/EP2008/055235
(87) International publication number: WO 2008/135454

(56) References cited:
- EP-A- 0 871 099
- EP-A- 1 442 837
- EP-A- 1 586 414
- DE-A1- 3 914 059

## Description

This invention relates to a machine tool for precision micro-milling and/or drilling of the type including the characteristics mentioned in the precharacterising portion of the principal claim. These machines are used for micro-milling work for example for the purpose of the accurate and precision engraving of logos or designs on small metal and/or plastics parts. An example of such machines is described in EP 871 099.

A typical use for such machines is in the processing of spectacle frames.

A problem which arises in the specific sector to which the invention relates is that of engraving the surface of a part with great accuracy, at a high hourly output rate, while at the same time maintaining a correct and constant depth of machining with respect to the visible surface of the part.

These three requirements have however proved to be incompatible in practice. When a system is in fact adopted to ensure good constancy of working depth there is then a corresponding reduction in the hourly output of the machine because of the need to read the surface with a point sensor, or a constant working depth is achieved, but only with surfaces which have particular optical properties. For example, where laser means or detectors are used there are limits to both the type of material which can be worked and the colour of its visible surface.

Thus, when higher hourly output and/or no effect due to the optical properties of the material worked is desired, the working depth is maintained constant, on average but not locally, with consequent local variation corresponding to surface undulations.

In conventional machines there is no provision for a suitable system for removing swarf, which can also give rise to surface damage on the object worked during the stages of milling and/or drilling.

Another example of tool machine provided with sensing means for depth control is described in EP 1 586 414, disclosing a toolhead provided with a depth-stop surface capable of moving along the maching axis. The position of the depth-stop surface relative to the support assembly is then used to control the depth to which the workpiece is penetrated by the tool.

The problem underlying this invention is that of providing a machine tool which is capable of carrying out precision micro-milling and/or drilling, and which is functionally and structurally designed to overcome all the disadvantages mentioned with reference to the cited known art.

This problem is overcome by the invention through a machine tool constructed in accordance with the following claims.

Other advantages and characteristics of the present invention will become clear from the following detailed description which is given with reference to the appended drawings which are provided by way of illustrative and non-limiting example and in which:

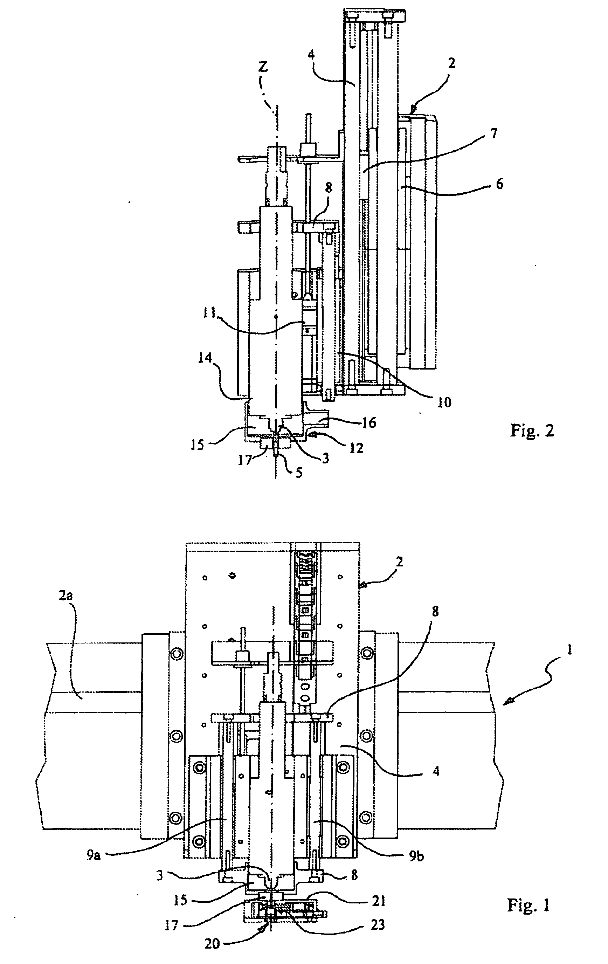

- Figure 1 is a front cross-sectional view of a milling and/or drilling machine tool according to this invention,
- Figure 2 is a side cross-sectional view of the machine in Figure - 1,

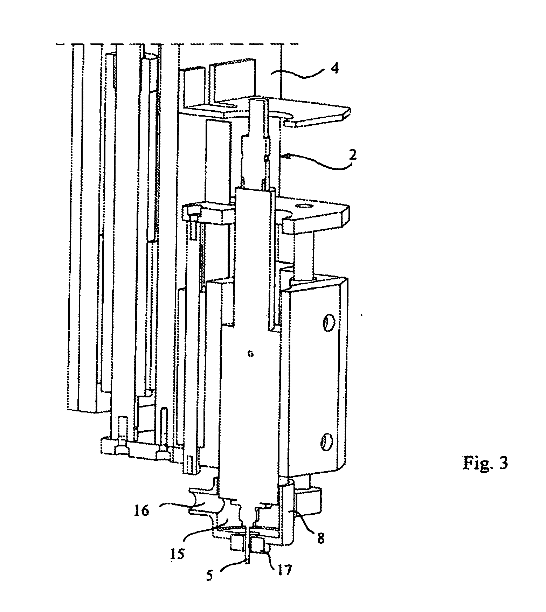

- Figure 3 is an axonometric view of a cross-section of the machine in Figure 1,

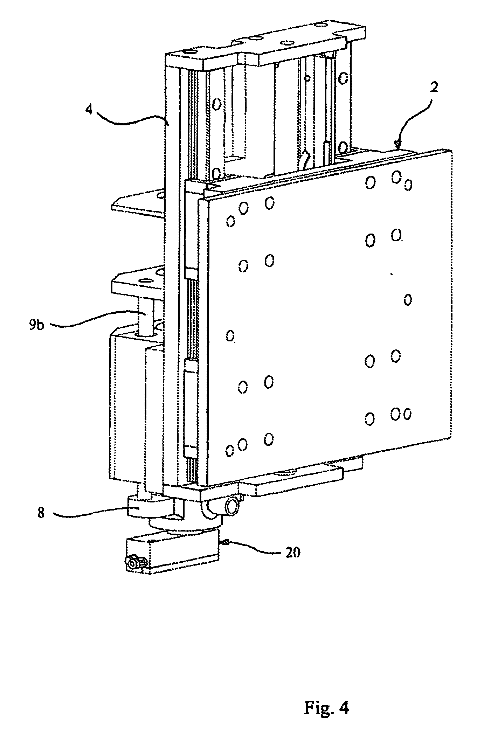

- Figure 4 is an axonometric view of the machine in Figure 1 from a direction opposite to that in Figure 3,

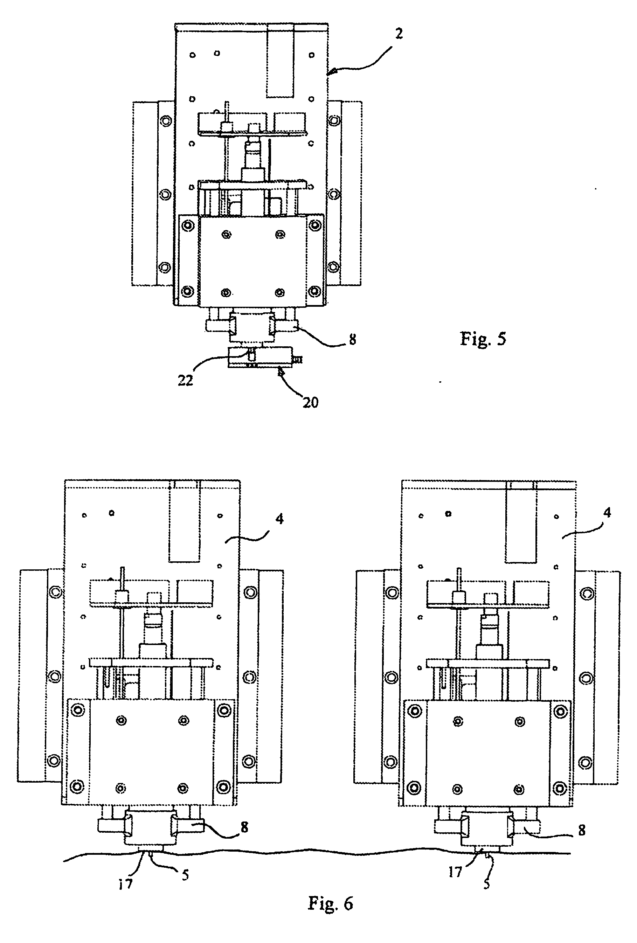

- Figure 5 is a front view of the machine in Figure 1,
- Figure 6 is a view of two different operating conditions of the machine in Figure 1.

In the figures, 1 as a whole indicates a machine tool for micro-milling and/or drilling according to this invention.

Machine 1 comprises one (or possibly more than one) working head 2 mounted on a guide and slide system which is in itself conventional and has a support 4 on which a powered spindle 3 is mounted, which can be moved along a substantially vertical axis Z, the so-called third axis in that the first two axes are those identifying the plane in which the workpiece lies.

Movement of the spindle 3 along the third axis Z takes place as one piece with the movement of support 4.

Working head 2 is slideably mounted on a guide 2a, which is substantially horizontal, parallel to the plane in which the workpiece lies.

A tool 5 can be replaceably fixed to the spindle 3, the tool 5 can be driven in rotation and has a predetermined length along the Z axis. Support 4 is moved together with the spindle 3 along the Z axis by means of a linear actuator 6 known as a depth actuator which is controlled by a corresponding encoder 7 which is also linear. Encoder 7 represents first detection means which is functionally designed to detect the relative position of the spindle along the third axis with respect to an origin which is identified and fixed as more particularly indicated below.

Together with the spindle, is also mounted on support 4, a second support 8, which is vertically guided along the Z axis by two columns 9a, b and driven in that motion by its own linear motor 10 with a corresponding encoder 11. At the extremity of second support 8 corresponding to tool 5 there is a suction device 12 having a hollow body defining a suction chamber 15 provided with a suction duct 16. Chamber 15 is closed on the upper part by the frame 14 of the motor driving the spindle 3, and is movably connected to frame 14 and has beneath it a contact lip 17, for example a rigid brush, which surrounds tool 5 when in use. The assembly acts a tracer device through which the surface profile of the workpiece being machined is detected together with the machined area. This detection performed by encoder 11 is fed as a digital control signal to the numerical control of the machine 1 so as to control the depth actuator 6 by offset and to maintain constant the working depth of tool 5.

The same assembly also acts a workpiece pressure-holding device as a result of the pressure with which the lip 17 may be pressed by the linear motor 10 against the workpiece being machined.

Machine 1 finally comprises a stop device 20, for example associated with a tool-changing device, which is used to determine the origin position for head 2.

Stop device 20 comprises a stop surface 21 with a passage 22 for the tool 5 and a laser beam reader 23 suitable for determining the actual position of the point of tool 5 when the contact lip 17 is pressed onto surface 21. In this way, the machine zero is automatically set at every tool change to determine the machining depth of the tool and the corresponding position of the pressure-holding device relative to the head 2.

While machine 1 is in operation, encoder 11 associated with the position of the suction device detects the surface profile of the workpiece being machined consequently adapting the working position of the spindle 3. At the same time, the device 12 sucks away and removes swarf and dust generated by machining, preventing these from causing surface damages to the workpiece.

Because of the mechanical contact between the surface of the workpiece being machined and the contact lip, the machine can be adjusted for any material and is not influenced by surface colour. The machine is set up as follows:
first of all head 2 is moved to stop device 20 and the pressing lip 17 is lowered onto the surface 21 by means of the linear motor 10. The tool is then raised, moving from a condition in which it intercepts laser beam 23 to a condition of free passage of the latter, thus determining the actual position of the tool on the Z axis.

The relative position between the tool 5 and the contact lip 17 is thus determined by the difference between the signals generated by the two encoders. Then the linear motors which control the position of the spindle 3 and of the tracer device are controlled automatically and independently in accordance with predetermined working parameters. Movement of the working head along guide 2a makes it possible to position tool 5 in several workstations so that a number of workpieces can be machined in sequence without waiting for the finished workpiece to be removed and the next unfinished workpiece to be loaded.

The invention thus solves the problem set, providing many advantages such as a high production capacity, optimum cleaning of the working area and accurate control of the working depth even when irregular surfaces are present.

## Claims

1. A machine tool (1) for precision micro-milling and/or drilling comprising: at least one working head (2) with a tool-holding spindle (3) driven along a third axis (Z) and able to move along said third axis (Z) by means of a depth actuator (6) under computerised digital control towards and away from the workpiece to be machined, as well as first detector means (7) to detect the relative position of the spindle (3) along the third axis (Z) with respect to an origin, said head (2) including second detector means (11) to detect the surface of the workpiece to be machined and to consequently activate said depth actuator (6), said second detector means (11) comprising a tracer device which continually traces the surface of the workpiece to be machined close to the tool (5) so as to detect the surface profile and consequently adapt the working position of the spindle (3) during operation of the machine, whereby said tracer device (12) is defined by a swarf suction device (12) associated with said spindle (3), and whereby it is pressed in contact with the surface to be machined with a contact lip (17).

2. Machine tool according to claim 1 wherein said suction device (12) comprises a hollow body guided on said head (2) along said third axis (Z) and defining a suction chamber (15), said body being designed to be pressed in contact with the surface to be machined with said chamber (15) extending around said tool (5) and pressed against the surface to be machined with a contact lip (17), the movement of the tracer device being subjected to the control by an encoder (11) in order to detect the relative position of the hollow body and/or of the lip (17) relative to said head (2).

3. Machine tool according to claim 1 or 2, wherein said suction device (12) is a workpiece pressure-holding device.

4. Machine tool according to one or more of the preceding claims, wherein an actuator independent of the actuator of the spindle (3) is provided in order to move the tracer device along the third axis (Z).

5. Machine tool according to one or more of the preceding claims, wherein said first detector means (7) comprises a detector (23) for detecting the actual position of the tool (5) with respect to a set position.

6. Machine tool according to claim 5, wherein said detector of the actual position of the tool (5) is a laser beam detector (23).

7. Machine tool according to one or more of the Preceding claims, said contact lip (17) is pressed against the workpiece by a linear motor (10) acting on said tracer device (12).

8. Machine tool according to one or more of the preceding claims, wherein said suction device (12) is Provided at an extremity of a second support (8) mounted on a support (4) on which the spindle (3) is mounted, the second support (8) being vertically guided along the Z axis by two columns (9a,b).

9. Machine tool according to claim 7 and 8, wherein said second support (8) is driven along said columns (9a,9b) by said linear motor (10).

## Patentansprüche

1. Maschinenwerkzeug (1) zum Präzisions-Mikrofräsen und/oder -Bohren, umfassend: zumindest einen Arbeitskopf (2) mit einer Werkzeughaltespindel (3), welche entlang einer dritten Achse (Z) angetrieben ist und fähig ist, sich entlang der dritten Achse (Z) mittels eines Tiefenaktuators (6) unter computergestützter, digitaler Steuerung zu und weg von dem zu bearbeitenden Werkstück zu bewegen, so wie eine erste Detektoreinrichtung (7), um die relative Position der Spindel (3) entlang der dritten Achse (Z) bezüglich eines Ursprungs zu detektieren, wobei der Kopf (2) eine zweite Detektoreinrichtung (11) enthält, um die Oberfläche des zu bearbeitenden Werkstücks zu detektieren und folglich den Tiefenaktuator (6) zu aktivieren, wobei die zweite Detektoreinrichtung (11) eine Abtastvorrichtung umfasst, welche kontinuierlich die Oberfläche des zu bearbeitenden Werkstücks nahe dem Werkzeug (5) abtastet, um das Oberflächenprofil zu detektieren und folglich die Arbeitsposition der Spindel (3) während des Betriebs der Maschine anzupassen, wobei die Abtastvorrichtung (12) durch eine der Spindel zugeordnete Spanabsaugvorrichtung (12) definiert ist, und wobei sie mit der zu bearbeitenden Oberfläche mit einer Kontaktlippe (17) in Kontakt gedrückt wird.

2. Maschinenwerkzeug nach Anspruch 1, wobei die Absaugvorrichtung (12) einen hohlen Körper umfasst, welcher auf dem Kopf (2) entlang der dritten Achse (Z) geführt ist und eine Absaugkammer (15) definiert, wobei der Körper ausgebildet ist, in Kontakt mit der zu bearbeitenden Oberfläche gedrückt zu werden, wobei sich die Kammer (15) um das Werkzeug (5) herum erstreckt und mit einer Kontaktlippe (7) gegen die zu bearbeitende Oberfläche gedrückt wird, wobei die Bewegung der Abtastvorrichtung der Steuerung durch einen Geber (11) unterliegt, um die relative Position des hohlen Körpers und/oder der Lippe (17) relativ zu dem Kopf (2) zu detektieren.

3. Maschinenwerkzeug nach Anspruch 1 oder 2, wobei die Absaugvorrichtung (12) eine Werkstück-Druckhaltevorrichtung ist.

4. Maschinenwerkzeug nach einem oder mehreren der vorhergehenden Ansprüche, wobei ein Aktuator unabhängig von dem Aktuator der Spindel (3) vorgesehen ist, um die Abtastvorrichtung entlang der dritten Achse (Z) zu bewegen.

5. Maschinenwerkzeug nach einem oder mehreren der vorhergehenden Ansprüche, wobei die erste Detektoreinrichtung (7) einen Detektor (23) zum Detektieren der wirklichen Position des Werkzeugs (5) bezüglich einer gegebenen Position umfasst.

6. Maschinenwerkzeug nach Anspruch 5, wobei der Detektor der wirklichen Position des Werkzeugs (5) ein Laserstrahldetektor (23) ist.

7. Maschinenwerkzeug nach einem oder mehreren der vorhergehenden Ansprüche, wobei die Kontaktlippe (17) mittels eines auf die Abtastvorrichtung (12) wirkenden Linearmotors (10) gegen das Werkstück gedrückt wird.

8. Maschinenwerkzeug nach einem oder mehreren der vorhergehenden Ansprüche, wobei die Absaugvorrichtung (12) an einem Endpunkt eines zweiten Trägers (8) vorgesehen ist, welcher an einem Träger (4) montiert ist, an welchem die Spindel (3) montiert ist, wobei der zweite Träger (8) entlang der Z-Achse mittels zweier Säulen (9a,b) vertikal geführt ist.

9. Maschinenwerkzeug nach Anspruch 7 und 8, wobei der zweite Träger (8) entlang der Säulen (9a, 9b) mittels des Linearmotors (10) angetrieben ist.

## Revendications

1. Machine-outil (1) pour le micro-meulage et/ou perçage de précision comprenant : au moins une tête de travail (2) avec une tige porte-outil (3) entraînée le long d'un deuxième axe (Z) et capable de se déplacer le long dudit troisième axe (Z) au moyen d'un actionneur de profondeur (6) sous commande numérique informatisée vers et depuis la pièce de fabrication à usiner, ainsi que des premiers moyens de détection (7) pour détecter la position relative de la tige (3) le long du troisième axe (Z) par rapport à une origine, ladite tête (2) comprenant des deuxièmes moyens de détection (11) pour détecter la surface de la pièce de fabrication à usiner et en conséquence, activer ledit actionneur de profondeur (6), lesdits deuxièmes moyens de détection (11) comprenant un dispositif traceur qui trace en continu la surface de la pièce de fabrication à usiner à proximité de l'outil (5) de manière à détecter le profil de surface et en conséquence adapter la position de travail de la tige (3) pendant le fonctionnement de la machine, de telle manière que ledit dispositif traceur (12) soit défini par un dispositif d'aspiration de copeaux (12) associé à ladite tige (3) et de telle manière qu'elle soit pressée en contact avec la surface de manière à être usinée avec un bec de contact (17).

2. Machine-outil selon la revendication 1, dans laquelle ledit dispositif d'aspiration (12) comprend un corps creux guidé sur ladite tête (2) le long dudit troisième axe (Z) et définissant une chambre d'aspiration (15), ledit corps étant conçu pour être pressé en contact avec la surface à usiner avec ladite chambre (15) s'étendant autour dudit outil (5) et étant pressé contre la surface à usiner avec un bec de contact (17), le déplacement du dispositif traceur étant soumis à la commande par un codeur (11) afin de détecter la position relative du corps creux et/ou du bec (17) par rapport à ladite tête (2).

3. Machine-outil selon la revendication 1 ou 2, dans laquelle ledit dispositif d'aspiration (12) est un dispositif de support sous pression de pièce de fabrication.

4. Machine-outil selon une ou plusieurs des revendications précédentes, dans laquelle un actionneur indépendant de l'actionneur de la tige (3) est disposé afin de déplacer le dispositif traceur le long du troisième axe (Z).

5. Machine-outil selon une ou plusieurs des revendications précédentes, dans laquelle lesdits premiers moyens de détection (7) comprennent un détecteur (23) pour détecter la position réelle de l'outil (5) par rapport à une position définie.

6. Machine-outil selon la revendication 5, dans laquelle ledit détecteur de la position réelle de l'outil (5) est un détecteur à faisceau laser (23).

7. Machine-outil selon une ou plusieurs des revendications précédentes, ledit bec de contact (17) étant pressé contre la pièce de fabrication par un moteur linéaire (10) agissant sur ledit dispositif traceur (12).

8. Machine-outil selon une ou plusieurs des revendications précédentes, dans laquelle ledit dispositif d'aspiration (12) est disposé à une extrémité d'un deuxième support (8) monté sur un support (4) sur lequel la tige (3) est montée, le deuxième support (8) étant verticalement guidé le long de l'axe Z par deux colonnes (9a,b).

9. Machine-outil selon la revendication 7 et 8, dans laquelle ledit deuxième support (8) est entraîné le long desdites colonnes (9a, 9b) par ledit moteur linéaire (10).
